# EUROPEAN PATENT SPECIFICATION

(11) **EP 3 761 142 B1**
(45) Date of publication and mention of the grant of the patent: **31.08.2022**
(21) Application number: 20183782.0
(22) Date of filing: 02.07.2020
(51) Int. Cl.: G05D 1/02, G05D 1/00

(54) **MOBILE DEVICE, METHOD FOR ESTIMATING THE UNCERTAINTY IN THE POSITION OF SUCH A MOBILE DEVICE AND METHOD FOR ESTIMATING THE ORIENTATION OF SUCH A MOBILE DEVICE**
MOBILE VORRICHTUNG, VERFAHREN ZUR SCHÄTZUNG DER UNSICHERHEIT IN DER POSITION SOLCH EINER MOBILEN VORRICHTUNG UND VERFAHREN ZUR SCHÄTZUNG DER ORIENTIERUNG SOLCH EINER MOBILEN VORRICHTUNG
DISPOSITIF MOBILE, PROCÉDÉ D'ESTIMATION DE L'INCERTITUDE DANS LA POSITION D'UN TEL DISPOSITIF ET PROCÉDÉ D'ESTIMATION DE L'ORIENTATION D'UN TEL DISPOSITIF

(30) Priority: 02.07.2019 IT 201900010650
(43) Date of publication of application: 06.01.2021
(73) Proprietor: Stiga S.p.A. in breve anche St. S.p.A., 31033 Castelfranco Veneto (TV) (IT)
(72) Inventor: SCAPIN, Michele, 36061 Bassano del Grappa (VI) (IT); CECCHETTO, Mauro, 35018 San Martino di Lupari (PD) (IT); VALLONE, Varna, 31033 Castelfranco Veneto (TV) (IT); ROBINSON, Sean, 31033 Castelfranco Veneto (TV) (IT)
(74) Representative: PGA S.p.A.

(56) References cited:
- WO-A1-2018/214977
- US-A1- 2011 142 099
- US-A1- 2012 174 445
- US-A1- 2013 090 847

## Description

### FIELD OF THE INVENTION

The present invention relates to a mobile device suited to operate within a working area, such as land, lawns, gardens or agricultural land. The mobile device is a robotic lawnmower. The present invention further comprises a method for estimating uncertainty in measuring the position of the mobile device.

### PRIOR ART

Self-driving mobile devices (robots) are known in the sector and can be used in a working area, such as a garden, for carrying out specific operations, in particular mowing. These devices are subject to rather strict regulations in terms of safety, considering that they make use of potentially dangerous payloads, such as a rotating blades, for the execution of their operations.

Above all, this legislation places very severe constraints on the ability of the devices to remain in their working area. Once the contours of this working area have been defined, these contours cannot be crossed by self-driving mobile devices except for truly minimal trespassing (indicatively less than 100 cm) admissible on the basis of the strict tolerances established by law. Considering that the contours can separate the working area for example from a road or a swimming pool, the stringent dispositions established are easily understandable, given that if the mobile devices were to deviate significantly from the working area, they would harm the safety of people passing by on the road or swimming in the pool.

In fact, the legislation made it necessary, when installing an autonomous mobile device, to lay perimeter wire to physically define the contour of the working area. However, this laying is a particularly unwanted operation since the perimeter wire must be buried or fixed by means of pegs. As the size of the working area and/or the complexity of the geometry of the working area increase, laying perimeter wire becomes an increasingly complex, long and tiring operation. Furthermore, the perimeter wire can be damaged (for example due to wear or atmospheric events), so that, as a result of these damages, it loses its effectiveness in delimiting the working area of the mobile device.

Not even the affirmation of increasingly performing satellite technologies for detecting the position have so far managed to make no longer indispensable the laying of the perimeter wire, which therefore, to date, must be present in correspondence with all the contours of the working area that can be crossed by self-driving mobile devices.

As regards satellite technologies, it must also be pointed out that the autonomous driving of mobile devices is particularly critical in the so-called "shadow areas", that is to say in those areas (for example, under a tree with a thick crown or near a wall of a building) where mobile devices receive the signal from an insufficient number of satellites, wherein a sufficient number of satellites is considered to be equal to at least four satellites. If a shadow area is located near a contour of the working area and is not properly identified, this can create serious problems in the permanence of the mobile device in its working area.

Examples of technical solutions that have attempted to solve the drawbacks connected to the detection (by means of satellite technologies) of the position of a mobile device in a working area, without however being able to guarantee the necessary reliability required by sector regulations, are described in patent documents CA2364737A1, WO2011/115563A1 and US2018/0255704A1.

Document US2013/0090847A1 discloses a method for guiding an earth-moving vehicle which includes physical sensors, a primary antenna and a secondary antenna, the antennae receiving both GNSS-signals of a global positioning system. The secondary antenna is provided on the vehicle for solving carrier-phase ambiguities of the GNSS-signal and has a positional resolution lower than the primary antenna. The position of the secondary antenna is obtained starting from the position signal detected by the primary antenna. An antenna vector based on roll and yaw estimates obtained starting from the detections of the physical sensors is used in the calculation of the position of the secondary antenna. Another document of the prior art is WO2018/214977 A1.

### PURPOSE OF THE INVENTION

The objective of the present invention is therefore to solve at least one of the drawbacks and/or limitations of the previous solutions in the technical field of robotic lawnmowers.

A first objective of the present invention is to provide a mobile device and/or a relative operating method that makes it possible to comply with the stringent regulatory provisions in force, without requiring the laying of perimeter wire.

A further objective of the present invention is to guarantee the safe operation of the mobile device, also in correspondence with the shadow areas possibly present in the working area. A further objective of the present invention is to provide a mobile device and/or a relative operating method which appropriately takes into account the peculiarities of the contours of the working area of the mobile device. A further objective of the present invention is to provide a mobile device capable of operating within a working area defined by using particularly easy, effective and intuitive ways which allow the use of network technologies to program the operation of the mobile device and to monitor and/or control it.

A further objective of the present invention is to provide a mobile device whose orientation can be detected (punctually and with adequate accuracy).

A further objective of the present invention is to obtain the necessary information so that the self-driving mobile device can perform optimal maneuvers, in particular when starting up the mobile device.

These and other objectives, which will emerge more from the following description, are substantially achieved by a mobile device for the maintenance of land and/or by a method for estimating the uncertainty of the position of a mobile device for the maintenance of land and/or by a method for estimating the orientation of a mobile device for the maintenance of land in accordance with one or more of the appended claims and/or the following aspects.

### BRIEF DESCRIPTION OF THE DRAWINGS

Some embodiments and some aspects of the invention will be described below with reference to the accompanying drawings, provided for indicative and therefore non-limiting purposes only, wherein:
- Figure 1 is a side schematic illustration of a mobile device in accordance with the present invention;
- Figure 2 is a schematic top view of a mobile device according to the present invention;
- Figure 3 is a top schematic view of a mobile device operating within a working area as in accordance with the present invention;
- Figures 4 to 6 are schematic views of different configurations for receiving and processing of the signals;
- Figure 7 is a flowchart relating to a preferential form of operation of the mobile device.

### DEFINITIONS AND CONVENTIONS

It should be noted that in the present detailed description, corresponding parts illustrated in the several figures are indicated with the same numerical references. The figures could illustrate the object of the invention through schematic representations and not in scale.

### Mobile device

The term "mobile device" refers to a device for the maintenance of gardens, lawns, agricultural lands or crops. Preferably, the mobile device is a self-driving device.

By way of example, the mobile device may be a robotic lawnmower.

In possible embodiments of the mobile device (especially if it includes battery powered moving means), a base is associated with the mobile device, designed to perform specific operations, such as for example charging or refueling operations.

### Control unit

The mobile device herein described can include at least one control unit intended to control operating conditions carried out by the same mobile device and/or to control the steps of the method for the estimate of the uncertainty in the detection of the position and/or to control the steps of the method for the estimate of the orientation according to the present invention.

According to an optional technical solution, the mobile device herein described may be associated, by means of one or more suitable nodes that interface on a communication network, with a control unit arranged in a remote position with respect to the mobile device (for example cloud-based) and responsible for controlling the steps of the method for the estimate of the uncertainty in the detection of the position and/or for controlling the steps of the method for the estimate of the orientation according to the present invention.

The control unit can comprise a single unit or can be made up of a plurality of distinct control units, depending on design choices and operational requirements.

The expression "control unit" means a type of electronic component which may comprise at least one of the following: a digital processor (CPU), an analog circuit or a combination of one or more digital processors with one or more analog circuits. The control unit can be "configured" or "programmed" to perform some steps: this can be performed in practice by any means that can allow to configure or program the control unit. For example, if a control unit comprises one or more CPUs and one or more memories, one or more programs can be stored in appropriate memory banks connected to the CPU or to the CPUs. The program or programs contain instructions which, when executed by the CPU or by the CPUs, program or configure the control unit to perform the operations described in relation to the control unit. Alternatively, if the control unit is or includes analog circuitry, then the circuit of the control unit can be designed to include configured circuitry, when in use, to process electrical signals in such a way as to carry out the steps relating to the control unit.

### Working area

The mobile device is configured to operate in a working area. The expression "working area" refers in particular to an area defined in an outdoor environment, therefore a land such as a garden, a lawn, agricultural land or cultivated land. The working area can have homogeneous characteristics (for example a plot of land entirely used as a lawn) or heterogeneous characteristics.

The working area is a two-dimensional entity defined by at least one contour separating the working area from the adjacent areas. This contour can coincide at least in part with a physical obstacle (for example a wall or a hedge) that the mobile device cannot cross. Alternatively, this contour can coincide at least in part with a separation line of the working area with an adjacent installation (for example a road or a swimming pool) to which the mobile device shall not have access.

The contour of the working area can coincide at least partly with the external perimeter of the working area or with a stretch of the external perimeter of the working area. Additionally, the contour of the working area can coincide with a perimeter within the working area or with a stretch of a perimeter within the working area, this occurring in particular when physical obstacles must be excluded from the working area (for example a tree or a flower bed) or installations (for example a swimming pool) arranged inside the working area.

### Orientation

The term "orientation" refers to how the mobile device is directed, considering in particular an imaginary straight line defined by the direction of advancement of the mobile device. In particular, if the mobile device comprises more than one drive wheels, the direction of advancement is defined by operating the drive wheels at substantially the same rotation speed. Alternatively, it can be assumed as an imaginary straight line a line connecting a geometrically barycentric point of a front portion of the mobile device to a geometrically barycentric point of a back portion of the mobile device, the front of the mobile device preceding the back of the mobile device along the direction of advancement of the mobile device.

It should be pointed out how, according to the present invention, the orientation can be an absolute orientation (for example "9° east') or a relative orientation, expressed in the form of an angle defined with respect to a straight line of reference.

If it is preferred to express the orientation of the mobile device in relative terms, the same straight line of reference can always be used regardless of the position of the mobile device within the working area. For example, in this case a straight line of reference can be an imaginary straight line coinciding with the direction defined by the advancement of the mobile device through which the connection of the mobile device with the charging dock is made.

Alternatively, the straight line of reference can be varied according to the position that the mobile device occupies in the working area. For example, in this case a straight line of reference can be an imaginary straight line coinciding with the stretch of the contour of the working area that is closest to the mobile device.

### Global satellite navigation system

The expression "global satellite navigation system" refers to a system of georadiolocation and land, sea or air navigation, which uses a network of artificial satellites in orbit and pseudolites. The acronym "GNSS" is also often used for this system (from the English "Global Navigation Satellite System").

A global satellite navigation system is aimed at providing a geolocation service, or a geo-spatial positioning service with global coverage allowing specific electronic receivers to determine their geographical coordinates (longitude, latitude and altitude) on any point of the surface of the earth or atmosphere with an error of a few meters, processing radio frequency signals transmitted in line of sight by satellites.

In the present description and in the appended claims, reference will be made mainly, by way of explanatory example and not as a limitation, to the Global Positioning System (GPS) technology, of US derivation and currently fully operational. However, it should be noted that different technologies can be equivalently used for the purposes of the present invention, for example GLONASS technology (Russia), Galileo technology (Europe) and Beidou technology (China).

### DETAILED DESCRIPTION

### Mobile device

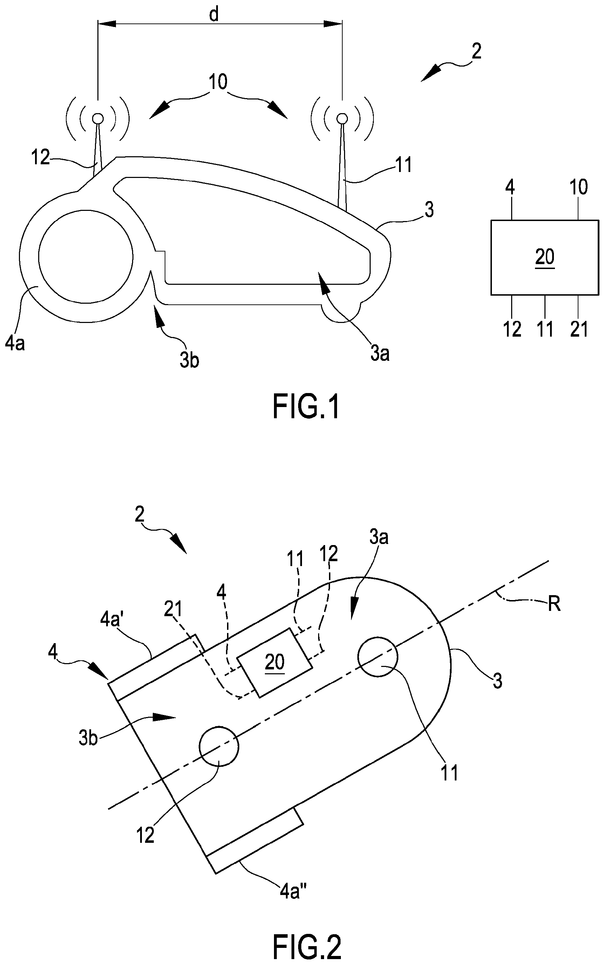

The term mobile device 2 refers to a device of the type shown schematically in Figures 1 to 3, used for the maintenance of gardens, lawns, agricultural land or crops within a working area 1. The mobile device 2 is a robotic lawnmower.

The mobile device 2 comprises a supporting frame 3 carrying moving means 4 configured to determine the movement of the device itself at least within the working area 1. The moving means 4 comprise at least one motor, of the electric or internal combustion type, connected to at least one drive wheel 4a: in particular, the mobile device 2 comprises three or more wheels of which at least one drive wheel, wherein these wheels are carried by the frame 3. In the embodiment shown in Figures 1 and 2, the device 2 comprises a first and a second drive wheel 4a', 4a", movable by rotation around the same axis. An asymmetrical angular rotation between the first drive wheel 4a' and the second drive wheel 4a" makes the mobile device 2 turn, while a symmetrical rotation between the first drive wheel 4a' and the second drive wheel 4a" causes a straight forward movement of the mobile device 2 along a direction coinciding with an orientation R of the mobile device 2 itself. If the mobile device 2 is moved by means of an electric motor, the frame 3 is configured to house at least one battery connected to the electric motor: this battery is in particular of the rechargeable type, so that the mobile device comprises at least one connector aimed at allowing connection to a charging base.

The mobile device 2 comprises at least one payload arranged to let the mobile device 2 perform at least one maintenance operation of the working area 1. In particular, this payload can be a rotating blade arranged in correspondence with a bottom portion of the frame 3 and configured to determine the mowing of the lawn/garden/land, the rotation of the rotating blade being caused by its activation (in continuous or selective mode) by means of a special actuation device (for example, an electric motor). Alternatively or additionally, the mobile device 2 may comprise one or more cutting, drilling or plowing tools. In a preferential embodiment, the mobile device 2 has a maximum size of between 100 mm and 1000 mm, more particularly between 200 mm and 400 mm. However, the possibility of providing mobile devices 2 with alternative dimensions is not excluded.

The mobile device 2 also comprises receiving means 10 carried by the frame 3 and configured to determine the position of the mobile device 2 itself at least when the latter is placed within the working area 1. Such position can be provided by means of a satellite system (in particular of the GPS type) or by means of a radio-frequency system (in particular of the Ultra wide Band type or Bluetooth type).

Advantageously, the position of the mobile device 2 is detected by using the "Time of flight" (ToF) technique, according to which the position is detected by starting from the flight time necessary for an electromagnetic wave to travel a certain distance. In the case of detection of the position of the mobile device 2 by means of a satellite system, this distance is the separation distance between a satellite and the mobile device 2. In the case of detection of the position of the mobile device 2 by means of a radio frequency system, this distance is the separation distance between a reference element (such as for example a charging base) and the mobile device 2, the reference element advantageously transmitting a start signal to the mobile device 2 which, once detected this start signal, transmits to the reference element a response signal to the mobile device 2 (starting from the elapsed time between the transmission of the start signal and the reception of the response signal it is possible to obtain the distance that separates the mobile device 2 from the reference element).

In the preferential embodiment, the reception means 10 of the mobile device 2 comprise a first antenna 11, positioned in a first region 3a of the frame 3 and configured to receive a first position signal, and a second antenna 12, positioned in a second region 3b of the frame 3 and configured to receive a second position signal, wherein the first region 3a and the second region 3b are mutually distinct and separated by a distance d (see Figure 1). In particular, the first region 3a is arranged at a front portion of the frame 3, while the second region 3b is arranged at a back portion of the frame 3. Preferably but not limited to, the first antenna 11 and the second antenna 12 are satellite antennas (in particular of the GPS type), configured to detect their position in terms of geographical coordinates and therefore interfaced to a position detection system of the GNSS ("Global Navigation Satellite System") type.

For the sake of clarity, it is intended to remark how, in the present description and in the appended claims, the aforementioned "first region" and "second region" of the mobile device 2 can have any extension, the extension of the first region of the mobile device 2 and the extension of the second region of the mobile device 2 being preferably very small with respect to the overall dimensions of the frame 3 of the mobile device 2, unto having a practically negligible extension (in this case, the first region 3a being around the point of installation of the first antenna 11 to the frame 3 of the mobile device 2 and the second region 3b being around the point of application of the second antenna 12 to the frame 3 of the mobile device 2).

In particular, the first antenna 11 and the second antenna 12 are positioned along a joining line, parallel or coincident with the orientation R of the mobile device as shown in Figure 2. Even more in particular, the direction of the orientation R of the mobile device 2 is perpendicular to an axis passing through the two drive wheels 4a', 4a". In other words, the direction of orientation R is parallel and optionally coinciding with the rectilinear direction of advancement of the mobile device 2.

The mobile device 2 further comprises a control unit 20 operatively connected to the receiving means 10 and configured to receive the signals emitted by these receiving means 10 and, in function of those signals, determine the position of the mobile device 2. Furthermore, the control unit 20 is operatively connected to the moving means 4, so as to drive them, typically depending on the position of the mobile device 2 and/or to the trajectory that is intended to be traveled by the mobile device 2. The control unit 20 is equipped with a suitable computational capacity and is configured to perform, among other things, comparison or contrast operations.

In particular, the control unit 20 is configured to determine the position of the first antenna 11, starting from the first signal received by the first antenna 11, and to determine the position of the second antenna 12, starting from the second signal received by the second antenna 12, wherein the position of the first antenna 11 is assumed to correspond to the position of first region 3a of the frame 3, while the position of the second antenna 12 is assumed to correspond to the position of the second region 3b of the frame 3.

The control unit 20 is also configured to estimate the uncertainty of the position of the mobile device 2 depending on the first position signal detected by the first antenna 11 and depending on the second position signal detected by the second antenna 12. The control unit 20 is configured to determine a measured value of the distance between the first antenna 11 and the second antenna 12, starting from the first position signal and the second position signal. This measured value of the distance between the first and second region 3a, 3b can be determined as a function of the geographical coordinates detected respectively by the first antenna 11 and the second antenna 12. In particular, the control unit 20 is configured to determine said distance on the basis of the difference between the coordinates detected by the first antenna 11, which are supposed to be corresponding to the position of the first region 3a, and the coordinates detected by the second antenna 12, which are supposed to be corresponding to the position of the second region 3b.

The control unit 20 is therefore configured to compare this measured value of distance with a reference value, the reference value being the actual distance d between the first and second antenna 11, 12. The comparison between the measured distance and the actual distance d can define an error in the measurement made by the first antenna 11 and/or by the second antenna 12: this error is proportional to an estimated uncertainty of the detection of the position (or in any case representative of an estimated uncertainty in the detection of the position) and allows therefore to obtain useful information about the precision in the detection of the position of the mobile device 2. This error can be calculated preferably in absolute terms such as the difference between the measured value of the distance between the first region 3a and the second region 3b (in particular between the first antenna 11 and the second antenna 12) and the actual distance between the first region 3a and the second region 3b (in particular between the first antenna 11 and the second antenna 12). Alternatively, the error can be calculated in terms of percentage difference with respect to the actual distance.

Furthermore, the mobile device 2 can comprise an odometer connected to one or more wheels of the frame 3 and to the control unit 20, wherein this odometer is configured to emit a signal representing an advancement of the mobile device 2 at least during an operating condition of the latter. In particular, the odometer can be a phonic wheel (for example an encoder or a tachometer) and can be installed on one or more drive wheels to measure its angular rotation. If a phonic wheel is used as an odometer, the control unit 20 is programmed to suitably take into account the maneuvers performed by the mobile device 2 during the calculation of the advancement of the mobile device 2. For example, if the drive wheel on which the phonic wheel is installed, it is the only wheel of the mobile device 2 to be activated, in order to vary its orientation, the control unit 20 is programmed to take into due account that this activation of the drive wheel does not substantially cause any advancement of the mobile device 2, but mainly causes a rotation of the mobile device 2 on itself.

The control unit 20 is configured to obtain also an estimated advancement of the mobile device 2 as a function of the first position signal deriving from the first antenna 11 and/or as a function of the second position signal deriving from the second antenna 12 and to compare this estimated advancement of the mobile device 2 with the advancement obtained by means of the odometer. This comparison further allows to validate the estimated uncertainty of the position of the mobile device 2. In other words, the advancement obtained by means of the odometer defines a parameter of reference which can be used to compare the estimated advancement by means of the signals deriving from the first and from the second satellite antenna 11, 12. If a discrepancy is detected, this comparison allows to further define the uncertainty about the accuracy in detecting the position of the mobile device 2. The comparison on the value of the advancement of the mobile device 2 can be redundant with respect to the comparison regarding the distance between the first and second antenna 11, 12: in other words, the control unit 20 can implement, in order to detect the position of the mobile device 2 and/or to estimate the uncertainty in detecting the position of the mobile device 2, both the comparison in terms of distance between the first and the second antenna 11, 12, and the comparison in terms of the advancement of the device 2 in order to increase the ability to estimate the uncertainty in the measurement of the position of the mobile device 2.

It is also worth noticing how, alternatively to the above-described odometer, different sensor devices can be installed on the mobile device 2, in order to obtain the desired redundancy in the detection of the position of the mobile device 2 and/or in order to estimate the uncertainty of the detection of the position of the mobile device 2. Appropriate sensor devices for achieving this redundancy (and listed here purely by way of non-limiting example) may be an inertial sensor (typically an accelerometer), an optical sensor (typically a camera) and/or a proximity sensor (typically a capacitive sensor). Furthermore, the mobile device 2, in order to obtain the desired redundancy in the detection of the position of the mobile device 2 and/or in order to estimate the uncertainty of the detection of the position of the mobile device 2, can provide means for connection to a remote network and receive from a specific service one or more corrective parameters of the position of the mobile device 2.

Furthermore, starting from the first and the second position signal emitted respectively by the first antenna 11 and by the second antenna 12 and on the basis of the positioning of the first and second antenna 11, 12 on the frame 3 in correspondence with the first and second region 3a, 3b, the control unit 20 is configured to estimate the orientation R of the mobile device 2. In other words, starting from the measured position of the first antenna 11 and the measured position of the second antenna 12 (respectively by means of the first signal of position and the second signal of position), the orientation R of the mobile device 2 is estimated as the direction of a straight line passing through the first and the second region 3a, 3b. In particular, this straight line is calculated as the straight line passing through two points, where the coordinates of these two points correspond respectively to the position of the first antenna 11 and to the position of the second antenna 12. The mobile device 2 can further comprise one or more orientation sensors, in particular a compass 13 operatively connected to the control unit 20 and configured to emit a signal representative of the orientation R of the mobile device 2. Such orientation obtained by means of the compass 13 defines an orientation of reference of the mobile device 2.

The provision of the compass 13 on board the mobile device 2 allows advantageously to obtain a redundancy in the detection of the orientation of the mobile device 2 (with respect to the estimate obtained by means of the provision of the pair of antennas). Advantageously, in the event of redundancy in the detection of the orientation of the mobile device 2, the control unit 20 of the mobile device is configured to perform a comparison in dynamic conditions between the detection of the orientation of the mobile device 2 by means of the pair of antennas and the detection of the orientation of the mobile device 2 by means of the compass 13. The control unit 20 is further configured to detect, starting from this comparison, a systematic error in the detection of the orientation of the mobile device 2 by means of the pair of antennas (for example, this comparison can highlight that the orientation of the mobile device 2 detected by means of the compass 13 differs on average by 3° with respect to the orientation of the mobile device 2 detected by means of the pair of antennas). Finally, the control unit 20 is configured to use this systematic error as a corrective factor for subsequent detections of the orientation of the mobile device 2 by means of the pair of antennas (for example, at the next start up of the mobile device 2).

The control unit 20 is then configured to compare the orientation R of the mobile device 2, estimated by means of the first and second signal received from the first and the second antenna 11, 12, with a threshold value, in particular with the orientation of reference obtained by means of the compass 13: such comparison further allows to validate the estimated uncertainty of the position and orientation of the mobile device 2.

On the basis of the above, the mobile device 2 is therefore able, by means of the compass 13 or by means of the first and second signal deriving from the first and second antenna 11, 12, to determine the orientation of the mobile device 2 even when the latter is in a static condition. Starting from this information, the control unit 20 is able to generate a command signal and transmit it to the moving means 4 in order to determine a movement of the mobile device 2 along a desired direction also starting from a static condition of the mobile device. In other words, the first movement of the mobile device, following its static condition, can be determined as a function of the orientation signal R provided by the first and second antenna 11, 12 and/or by the compass 13, so as to drive the mobile device 2 along a preferred direction.

Such detection of the orientation of the mobile device 2 in a static condition is extremely advantageous. This is easily understood if it is assumed that the mobile device 2 is in close proximity to a physical obstacle in the working area 1 (for example a wall with which the mobile device 2 can collide or a shrub where the mobile device 2 can remain stuck) or of a sensitive edge of the working area 1 (for example the side of a swimming pool or the side of a road) and is unfavorably oriented, i.e. towards such a physical obstacle or such a sensitive edge. In this case, the detection of the orientation of the mobile device 2, as well as its position, allows to perform the most appropriate maneuver just when the mobile device 2 is turned on (i.e. a maneuver to move the mobile device 2 away from the physical obstacle or from the sensitive edge). Alternatively, it would have been necessary to activate the mobile device 2 in order to determine an initial movement, of entity adequate to consent the detection of the orientation of the mobile device 2 or the detection of a different position of the mobile device 2, before finally being able to perform the most appropriate maneuver (thus creating a potential situation of serious risk, if the movement was enough to lead to an impact between the mobile device 2 and the fixed obstacle or a deviation of the mobile device 2 beyond the sensitive edge).

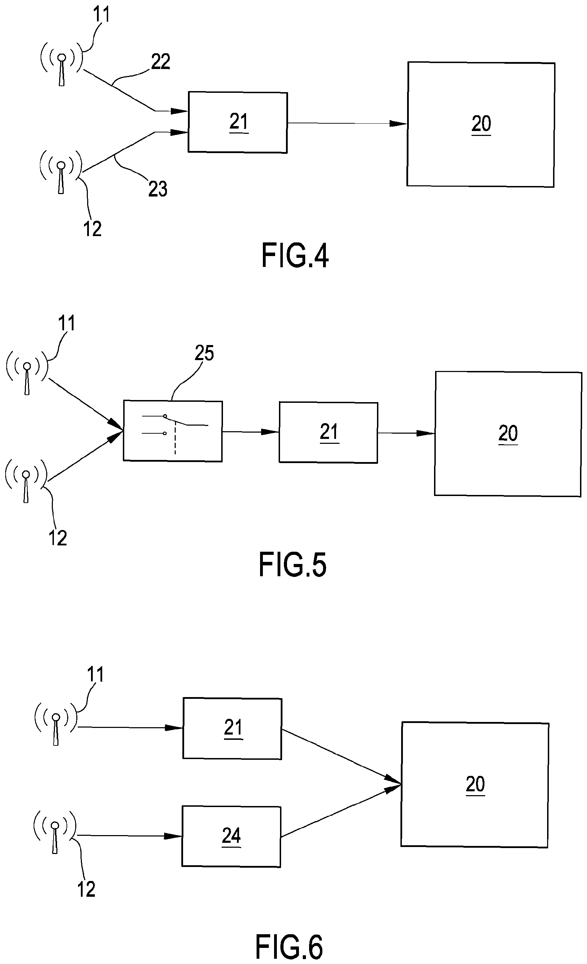

The reception means 10 can comprise a receiver 21, shown schematically in Figures 4, 5 and 6, placed in connection between the first antenna 11 and the control unit 20. Alternatively or in addition, the receiver 21 is placed in connection between the second antenna 12 and the control unit 20. In a preferential embodiment, the receiver 21 is connected to the first antenna 11 by means of a first input 22 and to the second antenna 12 by means of a second input 23. In this configuration, the reception means 10 further comprise a switch 25, shown in Figure 5, in particular a multiplexer, operatively interposed between the receiver 21 and the first and second antenna 11, 12. The switch 25 is configured to connect selectively the first antenna 11 or the second antenna 12 with the control unit 20, so that the control unit can cyclically receive the first and the second signal. Alternatively, the reception means 10 further comprise an additional receiver 24 operatively interposed between the second antenna 12 and the control unit 20, as shown in Figure 6 (in this alternative, the receivers being parallel to each other and being connected to two separate inputs of the control unit 20).

With regard to the configuration shown in Figure 5, which can be considered to be the preferred configuration of the receiving means 10 and which provides for the interposition of a switch 25 (in particular a multiplexer) between the pair of antennas and the receiver 21, it is preferable to adopt for the switch 25 a sufficiently high switching frequency so that between the detection of the position performed by the first antenna 11 and the detection of the position performed by the second antenna 12, the movement of the mobile device 2 shall be of negligible extent (even when the mobile device 2 moves at the maximum achievable speed). In this way, the detection of the position performed by means of the first antenna 11 and the detection of the position performed by means of the second antenna 12 are carried out in correspondence of the same position assumed by the mobile device 2 in the working area 1.

Within the scope of the present invention, it is possible to use a fixed switching frequency or a variable switching frequency. In the case of a variable switching frequency, an operational connection between the control unit 20 and the switch 25 can be contemplated. The control unit 20 is configured to determine an appropriate switching frequency value depending on the condition of the mobile device 2 (in particular, a higher switching frequency value is preferable when the mobile device 2 is in a dynamic condition rather than when it is in a static condition) and/or according to the maneuvers of the mobile device 2 (in particular, a higher switching frequency value is preferable when the mobile device 2 rotates on itself in order to vary its orientation rather than when it is advanced with rectilinear motion) and/or according to the speed of the mobile device 2 (in particular, a higher switching frequency value is preferable when the mobile device 2 is moved forward at full speed with respect to when the mobile device 2 is moved forward at reduced speed) and/or according to the position of the mobile device 2 in the working area 1 (in particular, a higher switching frequency value is preferable when the mobile device 2 is near a contour of the working area 1 rather than when the mobile device 2 is in a central region of the working area 1). The switching frequency value, once determined by the control unit 20, is then transmitted to the switch 25 which has a dedicated input for this purpose). The mobile device 2 can further comprise a communication node operatively connected to the control unit 20 and configured to allow the transmission and/or reception of signals on a local communication network or on a remote communication network. In particular, the information about the position and the orientation of the mobile device 2 may be transmitted to a remote device, such as a computer, a tablet or a smartphone, configured to show such information to an operator by means of a special interface (advantageously on a screen). In particular, in an optional embodiment, the control unit 20, configured to implement the steps of determining the geographical position of the device 1, in particular to determine the geographical position of the first and second antenna 11, 12 and to compare the distance values between such antennas with a reference value, can be carried by said remote device. In other words, the data concerning the mobile device 2, such as the geographical position detected by the first and second antenna 11, 12, can be sent to the remote device which is configured to implement the activation logic control of the moving means 4 of the device 2 to determine its movement.

Additionally, the mobile device 2 may comprise one or more proximity sensors carried by the frame support 3 and configured to emit a signal representative of the presence or the absence of an object/person in the vicinity of the mobile device 2. These proximity sensors are operationally connected to the control unit and mainly perform safety functions, in particular by stopping or deviating the mobile device 2 and/or by stopping the associated payload when an unexpected obstacle (for example a cat) interferes with the trajectory followed by the mobile device 2. By way of explanation, but not by way of limitation, such proximity sensors can comprise at least one capacitive sensor.

The mobile device 2 can comprise further sensor devices, to determine parameters such as the state of health of the lawn (in particular by means of the calculation of the NDVI index) and/or the soil moisture and/or the height of the grass.

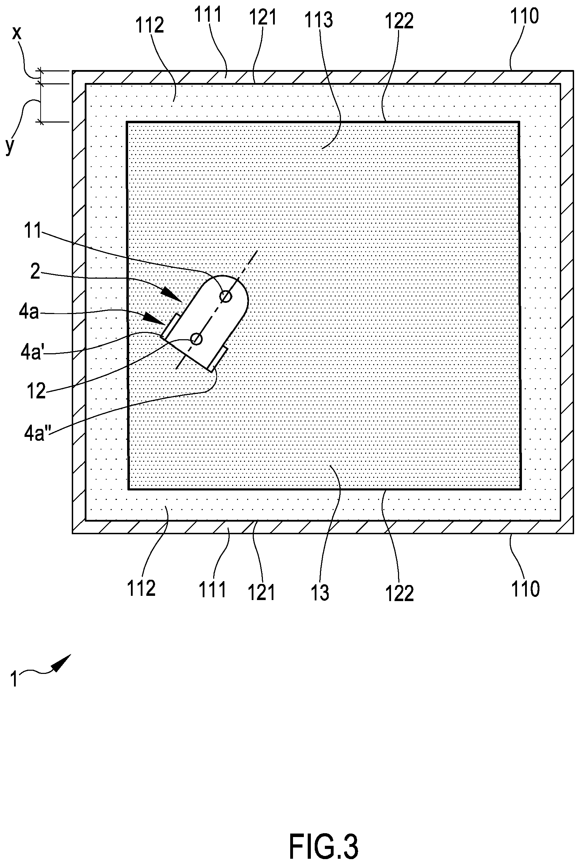

The mobile device 2 is preferably a self-driving mobile device, wherein its movements can be defined at least partly in function of its particular position inside the working area 1. Consequently, the highest possible accuracy in estimating its position and orientation is required. In one configuration, the mobile device 2 can operate within a working area 1, of the type shown (for explanatory but not limitative purposes) in Figure 3, delimited by a contour 110 defining a limit beyond which the mobile device 2 is not authorized to access (in particular for safety reasons). The contour 110 can define the perimeter boundary of the garden or of the ground where the mobile device is apt to operate. The attached drawings show, for the sake of simplicity, a contour 110 having a polygonal shape, wherein each section is defined by a straight segment to define a closed profile. Alternatively, the contour 110 can have a polygonal or curvilinear shape or a combination thereof.

In this configuration, the working area 1 internally includes a first region 111 interposed between the contour 110 and a first boundary 121 placed as a demarcation of the first region 111. The first region 111 extends starting from contour 110 towards the interior of the working area 1 to the first boundary 121 defining a limit of the first region 111. The first region 111 can be associated with a first tolerance threshold, the latter defined as a minimum value required by the accuracy of the position of the mobile device 2 detected by the first and second antenna 11, 12. This tolerance threshold defines a limit about the maximum tolerable error in detecting the position of the mobile device 2. This threshold can be expressed in dimensional terms, for example the tolerance threshold may provide that the error in the detection of the position of the mobile device 2 must not exceed a predetermined threshold, this threshold being for example less than 300 mm, in particular less than 200 mm, even more particularly of about 100 mm.

The working area can further comprise a second region 112 extending inwardly from the first boundary 121 towards the interior of the working area 1. This second region 112 is associated with a second tolerance threshold different from the first tolerance threshold of the first region 111. In particular, the second tolerance threshold is greater than the first tolerance threshold: in other words, the second region 112 requires lower accuracy as regards the detection (by means of the first and the second antenna 11, 12) of the position of the mobile device 2 than what is required by the first region 111. Merely by way of example, if a maximum tolerance of less than 200 mm in estimating the position of the mobile device 2 is required in the first region 111, a maximum tolerance of less than 500 mm may be required within the second region 112, in particular between 200 mm and 500 mm. The extension of the first region 111 and the second region 112 can be arbitrarily defined by the operator, for example during the determination of the contour 110. In one embodiment of the present invention, the extension of the first region 111 is substantially constant, as shown in Figure 2.

In an alternative embodiment of the present invention, the extension of the first region 111 assumes different values according to the characteristics of the contour 110. Preferably, the extension of the first region 111 adjacent to a critical portion of the contour 110 (for example adjacent to the side of a swimming pool) is greater than the extension of the first region 111 adjacent to a non-critical portion of the contour 110 (e.g. adjacent to a low wall). In particular, the extension of the second region 112 is greater than an extension of the first region 111 in correspondence with the same portion of the contour 110 (as shown in Figure 3, wherein the extension x of the first region 111 is minor than the extension y of the second region 112).

Furthermore, the working area can include a third region 113, shown schematically in Figure 3, extending from a second boundary 122, placed as a demarcation between the second region 112 and the third region 113, towards the interior of the working area 1. The third region 113 is associated with a respective third tolerance threshold for estimating the position of the mobile device 2, wherein this third threshold defines a limit about the maximum tolerable error in the measurement of the position of the mobile device 2 within the working area 1. In particular, the third tolerance threshold is greater than the second tolerance threshold. In other words, the third tolerance threshold allows the mobile device 2 to operate within the third region 113 despite the level of accuracy in detecting the position of the mobile device 2 is reduced if compared to what is required within the first region 111 and the second region 112. The third region 113 therefore represents a low risk area, such that an inaccurate detection of the position of the mobile device 2, or at least less precise than required when placed in the first region 111 or in the second region 112, does not constitute a risk or danger factor.

The control unit 20, in addition to being configured, as previously described, to receive the position of the mobile device 2 from the receiving means 10 and estimate the uncertainty of this position, is further configured to compare this uncertainty with a tolerance threshold relating to the region of the working area 1, and determining the movement or the arrest of the mobile device according to this comparison.

In greater detail, if the uncertainty in the accuracy of the measurement of the position of the mobile device 2 is greater than the tolerance threshold associated with the region where the mobile device 2 is positioned, the control unit 20 can be configured to control the moving means 4 so as to drive the mobile device outside that region towards a region with a higher tolerance threshold, or to determine the arrest of the mobile device 2. If, however, the estimate of the uncertainty in the position of the mobile device 2 proves to be minor than the tolerance threshold associated with the region within which the mobile device is positioned (in particular minor than each of the tolerance thresholds associated with the regions of the working area 1), the control unit 20 can be configured to determine, by means of the moving means 4, the movement of the mobile device 2 to cover this region (in particular the entire working area 1) as long as the uncertainty of the position of the mobile device 2 (advantageously estimated continuously during the operation of the mobile device 2) remains lower than the tolerance threshold associated with the region within which he mobile device 2 is positioned, or alternatively until the end of the planned maintenance of this region.

### Method for estimating the uncertainty in the position

The present invention also presents a method for estimating the uncertainty of the detected position of the mobile device 2 by means of the first and second antenna 11, 12. This method provides for determining the position of the mobile device 2 at least when the latter is situated within the working area 1. This method comprises a step of receiving the first position signal from the first antenna 11 and the second position signal from the second antenna 12, and then estimating measurement uncertainty depending on these signals.

Some characteristics of this method for estimating the uncertainty of the position of the mobile device 2 can be deduced from the previous detailed description of the mobile device 2. In particular, the method has a step of determining a measured value of the distance between the first region 3a and the second region 3b of frame 3 starting from the first position signal and from the second position signal. In greater detail, this method provides for determining the distance interposed between the first and the second antenna 11, 12, as a function of the first and second signal, and comparing this measured distance value with a predetermined reference value, and in particular with the distance d (shown in figure 1) actually interposed between the first and second antenna 11, 12. This comparison phase allows to determine an estimate of the error in the measurement of the position of the mobile device 2 and therefore define the uncertainty of this position measurement.

The method for estimating the uncertainty can also provide, alternatively or in addition to what has been previously explained, a comparison phase with a reference signal generated for example by an odometer associated with the mobile device 2. The method can therefore provide for determining the advancement of the mobile device 2 by means of this odometer and by means of the first and second signal received by the first and second antenna 11, 12 and then to compare the advancement of the mobile device 2 detected by means of the first and second signal with the advancement detected by means of this odometer. Depending on the possible discrepancy between the two advancements, the method provides for estimating the uncertainty in the measurement of the position of the mobile device 2. Similarly, the reference signal can, alternatively or in addition, originate from an inertial sensor associated with the mobile device, from a vision system or from a receiver of at least one signal associated with the mobile device 2.

The method may further comprise a step of comparison between the uncertainty estimated in the measurement of the position of the device 2 with at least a threshold value representative of the maximum uncertainty accepted within a predetermined region of the working area 1. If the uncertainty in the measurement is greater than a predetermined tolerance threshold, the method can provide for stopping the mobile device. Alternatively, the method provides for comparing this uncertainty with the tolerance threshold required by the region of the working area 1, for example with the tolerance threshold required by the first region 111, the second region 112 or the third region 113 of the working area 1: if the uncertainty value meets the requirements of the region where the mobile device 2 is positioned, the mobile device 2 is free to move within this region, otherwise the method provides for generating a command signal and transmit it to the mobile device 2 to drive it towards a region with a greater tolerance threshold. In the event that the uncertainty value is lower than a predetermined threshold, in particular lower than the tolerance threshold of the first region 11, the method can provide for the movement of the mobile device 2 within the entire working area 1.

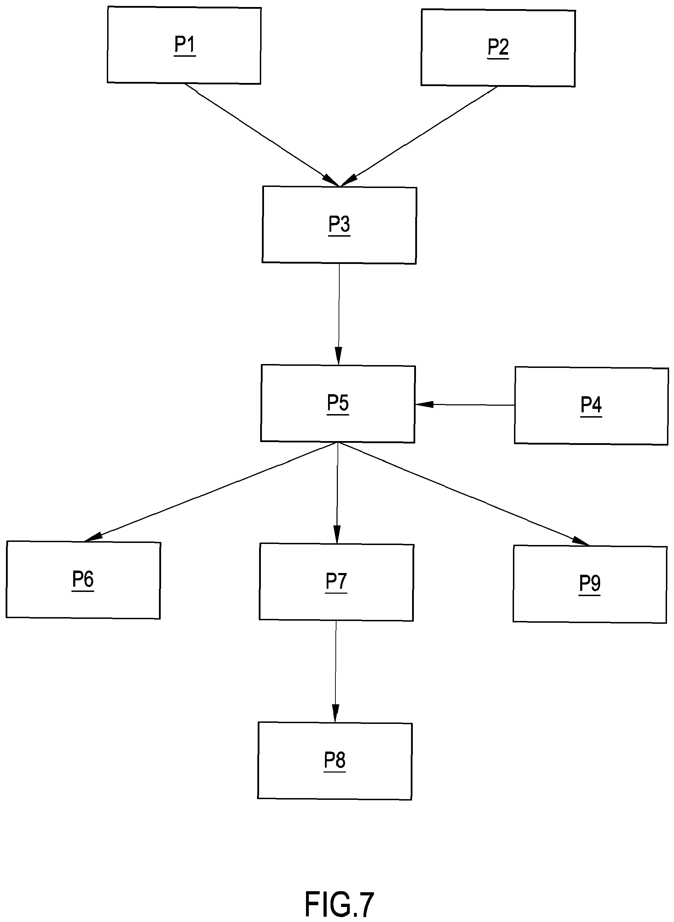

The flowchart of Figure 7 represents an embodiment of the method of estimating the uncertainty of the position of the mobile device according to the present invention, wherein:
- block P1 represents a step of reception of the first signal by the first antenna 11 arranged in correspondence with the first region 3a of the frame 3 of the mobile device 2, wherein said first signal is representative of the position, for example in terms of geographical coordinates, of the first antenna 11;
- block P2 represents a step of reception of the second signal by the second antenna 12 arranged in correspondence with the second region 3b of the frame 3 of the mobile device 2, wherein this second signal is representative of the position, for example in terms of geographical coordinates, of the second antenna 12;
- block P3 represents a step for determining the distance between the first and second antenna 11, 12 starting from the first and second signal, i.e. starting from the geographical coordinates where the first antenna 11 and the second antenna 12 have been detected to be respectively positioned;
- block P4 represents a step of reading of a reference value stored in memory and corresponding in particular to the actual distance between the first antenna 11 and the second antenna 12, this actual distance being determined during the construction of the mobile device 2 or subsequently measured directly on the mobile device 2;
- block P5 represents a step of comparison between the distance measured in block P3 starting from the first signal and the second signal received respectively by the first antenna 11 and the second antenna 12 and the reference value (in particular the actual distance) read in block P4, in order to define an estimated uncertainty of the measurement of the position of the mobile device 2.

The result of this step of comparison as referred to in block P5 is represented by blocks P6, P7 and P9, wherein:
- block P6 refers to an uncertainty in detecting the position of the mobile device 2 (optionally calculated as the difference between the actual distance and the distance measured between the first antenna 11 and the second antenna 12 and expressed in absolute or percentage terms) minor than the predetermined tolerance threshold of the region of the working area 1 wherein the mobile device 2 has been detected to be positioned: in this case, the mobile device 2 is free to move and operate within that region of working area 1;
- block P7 refers to an uncertainty in the detection of the position of the mobile device 2 (optionally calculated as the difference between the actual distance and the distance measured between the first antenna 11 and the second antenna 12 and expressed in absolute or percentage terms) between the tolerance threshold of the region of the working area 1 where the mobile device 2 has been detected and the maximum tolerance threshold: in this case, the method provides for a step of comparison between the uncertainty estimated at block P5 with the tolerance thresholds relating to regions of the working area 1 different from the region of the working area 1 wherein the mobile device 2 has been detected to be positioned (in particular relating to the regions of the working area 1 obtained within the region of the working area 1 where the mobile device 2 has been detected to be positioned). If there are regions of the working area 1 available for the maintenance operation performed by the mobile device 2, the control passes to block P8, wherein the mobile device 2 is moved in a different region of the working area, having a tolerance threshold greater than the detected uncertainty of the position of the mobile device 2, and it is left to operate there. If instead there are no regions of the working area 1 available for the maintenance operation performed by the mobile device 2, the mobile device 2 is stopped;
- block P9 refers to an uncertainty in the detection of the position of the mobile device 2 (optionally calculated as the difference between the actual distance and the distance measured between the first antenna 11 and the second antenna 12 and expressed in absolute or percentage terms) greater than the maximum tolerance threshold provided for the working area 1: in this case, the method provides for the arrest of the mobile device as the estimate of its position is not sufficiently precise.

Given a certain scheduling of the mobile device 2, according to which, during its operation, the mobile device 2 must provide for the maintenance of a predetermined portion of the working area 1, it is advisable that the mobile device 2 should operate in the region whose tolerance threshold is immediately greater than the estimated uncertainty of the position of the mobile device 2. Assuming that the scheduling of the mobile device 2 requires that the mobile device 2 should provide for the maintenance of the entire working area 1, it is advisable that the mobile device 2 should operate in the first region 111 when the position of the mobile device 2 is most reliable, i.e. when the uncertainty of the position of the mobile device 2 estimated from the first signal representative of the position of the first antenna 11 and from the second signal representative of the position of the second antenna 12 is minor than the tolerance threshold associated to the first region 111.

Therefore, if the mobile device 2 is detected to be positioned within the first region 111 and the uncertainty in detecting the position of the mobile device 2 has been estimated to be minor than the first tolerance threshold, the method provides for enabling the mobile device 2 to operate in the first region 111 of the working area 1, as long as the estimated uncertainty remains lower than the first tolerance threshold or as long as the mobile device 2 has completed the maintenance of the first region 111. In conjunction with a highly reliable detection of the position of the mobile device (i.e. when an uncertainty lower than the first tolerance threshold has been estimated), it can further be provided that, having been detected in a region of the working area 1 different from the first region 111 (for example in the second region 112), the mobile device 2 is allowed to enter the first region 111 and therefore to operate in the first region 111.

On the contrary, if the mobile device has been detected to be positioned within the first region 111 and the uncertainty in the measurement of the position has been estimated to be greater than the first tolerance threshold, the method provides for comparing the uncertainty previously estimated with the tolerance threshold of the second region 112 and therefore possibly with the tolerance threshold of the third region 113. If the uncertainty estimated in the measurement of the position of the mobile device 2 is minor than the tolerance threshold of the second region 112, the method can provide for controlling the movement of the mobile device 2 leaving the first region 111 through the first boundary 121 to position itself within the second region 112. Alternatively, if the uncertainty estimated in the measurement of the position of the mobile device 2 is greater than the tolerance threshold of the second region 112, but minor than the tolerance threshold of the third region 113, the method can provide for controlling the movement of the mobile device 2 towards the third region 113, first by crossing the first boundary 121 and then the second boundary 122.

Finally, it should be noted that the method for estimating the uncertainty in the position of the mobile device 2 of the present invention can be equivalently applied both when the position of the mobile device 2 is detected by means of absolute coordinates (the first antenna 11 and the second antenna 12 being in such a case apt to receive a satellite signal, such as for example a GPS signal), and when the position of the mobile device 2 is detected by means of relative coordinates with respect to a reference element such as for example a charging base (the first antenna 11 and the second antenna 12 being in such a case apt to receive a radio frequency signal, such as for example an Ultra Wideband type signal or a Bluetooth type signal).

### Method for estimating the orientation

The present invention also presents a method for estimating the orientation of the mobile device 2 starting from the signals received from the first antenna 11 and second antenna 12. This method provides for receiving the first position signal from the first antenna 11 and the second position signal from the second antenna 12 and thus for estimating the orientation R of the mobile device 2 according to these signals. In particular, the method provides for detecting the position of the first and second antenna 11, 12, as a function respectively of the first and second signal, the straight line passing through the position of the first antenna 11 and second antenna 12 defining a direction coinciding with the orientation R of the mobile device 2.

Some characteristics of this method for estimating the orientation of the mobile device 2 can be deduced from the previous detailed description of the mobile device 2.

The method can also provide for generating a reference signal of the orientation R of the device 2 by means of a compass 13 associated with the mobile device 2 and to compare the estimated orientation starting from the first signal and from the second signal of the first antenna 11 and of the second antenna 12, with the orientation obtained starting from the reference signal of the orientation R generated by the compass 13, in order to estimate the uncertainty of the orientation R thus obtained starting from the first signal and the second signal.

The method can further provide for the quantification of a possible systematic error in the estimate of the orientation R of the mobile device 2, wherein this quantification takes place after a predetermined movement of the mobile device 2. In other words, the method provides for a continuous or discrete frequency estimate of the orientation R of the mobile device 2 by means of the signals detected by means of the first and second antenna 11, 12 and by means of the compass 13, as well as a quantification of the possible relative systematic error occurring when the mobile device 2 is in motion. Typically, such quantification can be done by detecting that, during the advancement of the mobile device 2, the average value of the orientation R of the mobile device 2 estimated from the first signal and the second signal differs from the average value of the orientation R of the mobile device 2 estimated from the reference signal. It is therefore assumed that this difference between the average values above is representative of the possible systematic error inherent in the estimate of the orientation R of the mobile device 2 as a function of the first signal and the second signal.

The method may further comprise the generation of a command signal from the orientation R of the mobile device 2 estimated as a function of the first position signal and the second position signal received respectively by means of the first antenna and the second antenna. This command signal makes it possible to drive the moving means 4 of the mobile device 2 so that the movement of the device 2 takes place in a predefined direction.

In a dynamic condition of the mobile device 2, it is in particular possible to operate the mobile device 2 with considerable precision, so that the mobile device 2 can follow the desired path as reliably as possible. In particular, in correspondence with curvilinear stretches of this path and/or in correspondence with transition portions of this path connecting two differently directed rectilinear stretches, the estimate of the orientation R according to the present invention allows to verify constantly if a maneuver of the mobile device 2 has produced the desired change in direction and, if not, suddenly provide the corrective maneuvers necessary to establish the correct orientation of the mobile device 2. It is easy to understand how the estimate of the orientation R according to the present invention is also able to allow the mobile device 2 to optimally avoid any obstacles present in the working area 1 and detected by means of a proximity sensor, for example capacitive, or by means of a vision system and further able to allow an optimal approach of the mobile device 2 to the charging base.

In a static condition of the mobile device 2, it is in particular possible to carry out the correct maneuver right at the start of the mobile device 2, without therefore having to resort to a predetermined initial advancement of the mobile device 2 intentionally aimed at knowing its orientation R. This is evidently of considerable importance if the mobile device 2 has previously been stopped in close proximity to a physical obstacle in the working area 1 (for example a wall with which the mobile device 2 can collide or a shrub where the mobile device 2 can remain stuck) or to a sensitive edge of the working area 1 (for example the side of a swimming pool or the side of a road) and is unfavorably oriented, i.e. towards such physical obstacle or such sensitive edge. The opportunity of having, by means of the method according to the present invention, an estimate of the orientation R of the mobile device 2 even in a static condition of the mobile device 2, allows to carry out already at the start of the mobile device 2 the most appropriate maneuver (i.e. a maneuver to move the mobile device 2 away from the physical obstacle or from the sensitive edge), thus avoiding the occurrence of a situation of serious risk (such as for example a deviation of the mobile device 2 beyond the sensitive edge).

It is particularly to be appreciated how the method for estimating the orientation according to the present invention can be used to optimally drive the mobile device 2 not only during its operation in the working area 1, but also during the procedure of installation preceding its operation and which is specifically aimed at performing an initial mapping of the working area 1.

Finally, it should be noted that the method for estimating the orientation of the mobile device 2 of the present invention can be equivalently applied both when the first antenna 11 and the second antenna 12 are configured to receive a satellite signal, such as for example a GPS type, and when the first antenna 11 and the second antenna 12 are instead configured to receive a radio frequency signal, such as for example an Ultra Wideband type signal or a Bluetooth type signal. The orientation of the mobile device 2 can in fact be obtained both from absolute coordinates and from relative coordinates with respect to a reference element such as for example a charging base. In the first case the orientation of the mobile device 2 can be expressed by referring to the cardinal points (in particular by indicating how the mobile device 2 is directed with respect to a fundamental cardinal point), while in the second case the orientation of the mobile device 2 can be expressed by referring to one or more straight lines whose respective directions are known (in particular by indicating the defined angle with respect to a straight line parallel to a predetermined stretch of the contour of the working area).

### ADVANTAGES OF THE INVENTION

From the detailed description above, it is clear that the present invention brings significant improvements to self-driving mobile devices and their control methods and therefore allows to obtain significant technical advantages.

In particular, the present invention is clearly capable of overcoming both the drawbacks associated with the prior art which requires the installation of perimeter wire, and the difficulties associated with satellite technologies for detecting the position, especially the compliance with the stringent safety provisions and the management of the navigation in shadow areas.

Furthermore, the present invention, thanks to the (precise and accurate) knowledge of the orientation of the mobile device, allows to drive the mobile device in an optimal way at all times, even starting from a static condition.

These and other advantages are achieved by the mobile device and by its methods for estimating the uncertainty of its position and for estimating its orientation according to the invention and according to variants of the same, which however fall within the scope of protection defined by the following claims.

## Claims

1. Robotic lawnmower comprising:
- a frame (3);
- moving means (4) carried by said frame (3) and configured to determine the movement of said robotic lawnmower;
- receiving means (10) configured to receive at least one position signal, said receiving means (10) comprising a first antenna (11) configured to receive a first position signal, said first antenna (11) being arranged in a first region (3a) of said frame (3);
wherein a control unit (20) is operatively connected to said receiving means (10) so as to determine the position of said robotic lawnmower starting from the position signal received from said receiving means, said control unit being further operatively connected to said moving means (4) so as to drive said moving means (4) according to the position of said robotic lawnmower;
wherein said receiving means (10) comprise a second antenna (12) configured to receive a second position signal, said second antenna (12) being arranged in a second region (3b) of said frame (3), said first region (3a) of said frame (3) being distinct from said second region (3b) of said frame (3),
**characterised in that**
said control unit (20) is configured to estimate the uncertainty in the position of said robotic lawnmower according to said first position signal and to said second position signal, wherein said control unit (20) is configured to determine a measured value of the distance between said first antenna (11) and said second antenna (12) starting from said first position signal and from said second position signal and
wherein said control unit (20) is configured to compare said measured value with the actual distance (d) between said first antenna (11) and said second antenna (12).

2. Robotic lawnmower according to claim 1, further comprising an odometer, operatively connected to said control unit (20) and configured to emit a signal representative of an advancement of said robotic lawnmower, wherein said control unit (20) is configured to obtain an estimated advancement of said robotic lawnmower as a function of said first position signal and/or as a function of said second position signal and to compare said estimated advancement of said robotic lawnmower with the advancement of said robotic lawnmower obtained by means of said odometer, in order to validate the estimated uncertainty in the position of said robotic lawnmower (2).

3. Robotic lawnmower according to claim 1 or according to claim 2, wherein said control unit (20) is configured to compare the estimated uncertainty in the position of said robotic lawnmower with at least one threshold value, said threshold value being in particular representative of the maximal uncertainty allowed in a predetermined portion of a working area (1) of said robotic lawnmower.

4. Robotic lawnmower according to any one of the previous claims, wherein said control unit (20) is configured to estimate the orientation (R) of said robotic lawnmower starting from said first position signal and from said second position signal,
said robotic lawnmower further comprising a compass (13) operatively connected to said control unit (20) and configured to emit a signal representative of an orientation (R) of said robotic lawnmower, wherein said control unit (20) is configured to compare the estimated orientation of said robotic lawnmower with the orientation (R) of said robotic lawnmower obtained by means of said compass (13), in order to validate the estimated uncertainty in the position of said robotic lawnmower.

5. Robotic lawnmower according to claim 4, wherein said control unit (20) is further configured to generate a command signal starting from the estimated orientation (R) of said robotic lawnmower and to transmit said command signal to said moving means (4), in particular to cause a manoeuvre of said robotic lawnmower in conjunction with a start-up phase.

6. Robotic lawnmower according to any one of the previous claims, wherein said receiving means (10) further comprise a receiver (21) of said at least one signal, said receiver being operationally interposed between said first antenna (11) and said control unit (20).

7. Robotic lawnmower according to claim 6, wherein said receiver (21) of said at least one signal is operatively interposed between said second antenna (12) and said control unit (20),
wherein said receiver (21) is operatively connected to said first antenna (11) by means of a first input (22) and is operatively connected to said second antenna (12) by means of a second input (23) or
wherein said receiving means (10) further comprise a switch (25), in particular a multiplexer, operatively interposed between said first antenna (11) and second antenna (12) and said receiver (21).

8. Robotic lawnmower according to claim 6, wherein said receiving means (10) further comprise an additional receiver (24) of said at least one signal, said additional receiver (24) being operationally interposed between said second antenna (12) and said control unit (20).

9. Robotic lawnmower according to any one of the preceding claims, further comprising at least one communication node operatively connected to said control unit (20) and configured to allow the transmission and/or the reception of signals on a local or remote communication network.

10. Robotic lawnmower according to any one of the preceding claims, wherein said at least one position signal comprises a global navigation satellite system signal, in particular according to GPS technology.

11. Robotic lawnmower according to any one of the preceding claims, wherein said at least one positioning signal comprises a radio-frequency signal, in particular of the Ultra wideband or Bluetooth type.

12. Method for estimating the uncertainty in the position of a robotic lawnmower, said robotic lawnmower comprising:
- a frame (3);
- moving means (4) carried by said frame (3) and configured to determine the movement of said robotic lawnmower;
- receiving means (10) configured to receive at least one position signal;
wherein said receiving means (10) comprise a first antenna (11) and a second antenna (12), said first antenna (11) being arranged in correspondence of a first region (3a) of said frame (3), said second antenna (12) being arranged in correspondence of a second region (3b) of said frame (3), said first region (3a) of said frame (3) being distinct from said second region (3b) of said frame (3),
said method comprising the steps of:
a) receiving a first position signal by means of said first antenna (11), and
b) receiving a second position signal by means of said second antenna (12),
**characterised in that** the uncertainty in the position of said robotic lawnmower is estimated as a function of said first position signal and as a function of said second position signal, the method further comprising the steps of:
c) determining a measured value of the distance between said first antenna (11) and said second antenna (12) starting from said first position signal and from said second position signal, and
d) comparing said measured value with the actual distance between said first antenna (11) and said second antenna (12).

13. Method according to claim 12, wherein the estimated uncertainty in the position of said robotic lawnmower is validated by comparison with a reference signal, said reference signal being generated by means of an odometer associated with said robotic lawnmower and/or by means of an inertial sensor associated with said robotic lawnmower and/or by means of a vision system associated with said robotic lawnmower and/or by means of a receiver of at least one signal associated with said robotic lawnmower.

14. Method according to claim 12 or to claim 13, wherein said at least one position signal comprises a global navigation satellite system, in particular according to GPS technology.

15. Method according to any one of the claims 12 to 14, wherein said at least one position signal comprises a radio-frequency signal, in particular of the Ultra wideband or Bluetooth type.

## Patentansprüche

1. Roboter-Rasenmäher, umfassend:
- einen Rahmen (3);
- Bewegungsmittel (4), welche durch den Rahmen (3) getragen sind und dazu eingerichtet sind, die Bewegung des Roboter-Rasenmähers zu bestimmen;
- Empfangsmittel (10), welche dazu eingerichtet sind, wenigstens ein Positionssignal zu empfangen, wobei die Empfangsmittel (10) eine erste Antenne (11) umfassen, welche dazu eingerichtet ist, ein erstes Positionssignal zu empfangen, wobei die erste Antenne (11) in einem ersten Bereich (3a) des Rahmens (3) angeordnet ist;
wobei eine Steuerungseinheit (20) betriebsmäßig mit den Empfangsmitteln (10) verbunden ist, um die Position des Roboter-Rasenmähers ausgehend von dem Positionssignal zu bestimmen, welches von den Empfangsmitteln empfangen worden ist, wobei die Steuerungseinheit ferner betriebsmäßig mit den Bewegungsmitteln (4) verbunden ist, um die Bewegungsmittel (4) gemäß der Position des Roboter-Rasenmähers anzutreiben;
wobei die Empfangsmittel (10) eine zweite Antenne (12) umfassen, welche dazu eingerichtet ist, ein zweites Positionssignal zu empfangen, wobei die zweite Antenne (12) in einem zweiten Bereich (3b) des Rahmens (3) angeordnet ist, wobei sich der erste Bereich (3a) des Rahmens (3) von dem zweiten Bereich (3b) des Rahmens (3) unterscheidet,
**dadurch gekennzeichnet, dass** die Steuerungseinheit (20) dazu eingerichtet ist, die Unsicherheit in der Position des Roboter-Rasenmähers gemäß dem ersten Positionssignal und dem zweiten Positionssignal zu schätzen, wobei die Steuerungseinheit (20) dazu eingerichtet ist, einen gemessenen Wert des Abstandes zwischen der ersten Antenne (11) und der zweiten Antenne (12) ausgehend von dem ersten Positionssignal und dem zweiten Positionssignal zu bestimmen und
wobei die Steuerungseinheit (20) dazu eingerichtet ist, den gemessenen Wert mit dem tatsächlichen Abstand (d) zwischen der ersten Antenne (11) und der zweiten Antenne (12) zu vergleichen.

2. Roboter-Rasenmäher nach Anspruch 1, ferner umfassend ein Hodometer, welches betriebsmäßig mit der Steuerungseinheit (20) verbunden ist und dazu eingerichtet ist, ein Signal zu emittieren, welches für ein Fortschreiten des Roboter-Rasenmähers repräsentativ ist, wobei die Steuerungseinheit (20) dazu eingerichtet ist, ein geschätztes Fortschreiten des Roboter-Rasenmähers als eine Funktion des ersten Positionssignals und/oder als eine Funktion des zweiten Positionssignals zu erhalten und das geschätzte Fortschreiten des Roboter-Rasenmähers mit dem Fortschreiten des Roboter-Rasenmähers zu vergleichen, welches mittels des Hodometers erhalten worden ist, um die geschätzte Unsicherheit in der Position des Roboter-Rasenmähers (2) zu validieren.

3. Roboter-Rasenmäher nach Anspruch 1 oder nach Anspruch 2, wobei die Steuerungseinheit (20) dazu eingerichtet ist, die geschätzte Unsicherheit in der Position des Roboter-Rasenmähers mit wenigstens einem Schwellenwert zu vergleichen, wobei der Schwellenwert insbesondere für die maximale Unsicherheit repräsentativ ist, welche in einem vorbestimmten Abschnitt eines Arbeitsbereichs (1) des Roboter-Rasenmähers erlaubt ist.

4. Roboter-Rasenmäher nach einem der vorhergehenden Ansprüche, wobei die Steuerungseinheit (20) dazu eingerichtet ist, die Orientierung (R) des Roboter-Rasenmähers ausgehend von dem ersten Positionssignal und von dem zweiten Positionssignal zu schätzen,
wobei der Roboter-Rasenmäher ferner einen Kompass (13) umfasst, welcher betriebsmäßig mit der Steuerungseinheit (20) verbunden ist und dazu eingerichtet ist, ein Signal zu emittieren, welches für eine Orientierung (R) des Roboter-Rasenmähers repräsentativ ist, wobei die Steuerungseinheit (20) dazu eingerichtet ist, die geschätzte Orientierung des Roboter-Rasenmähers mit der Orientierung (R) des Roboter-Rasenmähers zu vergleichen, welche mittels des Kompass (13) erhalten worden ist, um die geschätzte Unsicherheit in der Position des Roboter-Rasenmähers zu validieren.

5. Roboter-Rasenmäher nach Anspruch 4, wobei die Steuerungseinheit (20) ferner dazu eingerichtet ist, ausgehend von der geschätzten Orientierung (R) des Roboter-Rasenmähers ein Befehlssignal zu erzeugen und das Befehlssignal an die Bewegungsmittel (4) zu übertragen, insbesondere um ein Manöver des Roboter-Rasenmähers in Verbindung mit einer Inbetriebnahme-Phase zu bewirken.

6. Roboter-Rasenmäher nach einem der vorhergehenden Ansprüche, wobei die Empfangsmittel (10) ferner einen Empfänger (21) des wenigstens einen Signals umfassen, wobei der Empfänger betriebsmäßig zwischen der ersten Antenne (11) und der Steuerungseinheit (20) eingefügt ist.

7. Roboter-Rasenmäher nach Anspruch 6, wobei der Empfänger (21) des wenigstens einen Signals betriebsmäßig zwischen der zweiten Antenne (12) und der Steuerungseinheit (20) eingefügt ist,
wobei der Empfänger (21) mittels eines ersten Eingangs (22) betriebsmäßig mit der ersten Antenne (11) verbunden ist und mittels eines zweiten Eingangs (23) betriebsmäßig mit der zweiten Antenne (12) verbunden ist, oder
wobei die Empfangsmittel (10) ferner einen Schalter (25), insbesondere einen Multiplexer, umfassen, welcher betriebsmäßig zwischen der ersten Antenne (11) und der zweiten Antenne (12) und dem Empfänger (21) eingefügt ist.

8. Roboter-Rasenmäher nach Anspruch 6, wobei die Empfangsmittel (10) ferner einen zusätzlichen Empfänger (24) des wenigstens einen Signals umfassen, wobei der zusätzliche Empfänger (24) betriebsmäßig zwischen der zweiten Antenne (12) und der Steuerungseinheit (20) eingefügt ist.

9. Roboter-Rasenmäher nach einem der vorhergehenden Ansprüche, ferner umfassend wenigstens einen Kommunikationsknoten, welcher betriebsmäßig mit der Steuerungseinheit (20) verbunden ist und dazu eingerichtet ist, die Übertragung und/oder den Empfang von Signalen an einem lokalen oder entfernten Kommunikationsnetzwerk zu erlauben.

10. Roboter-Rasenmäher nach einem der vorhergehenden Ansprüche, wobei das wenigstens eine Positionssignal ein Signal eines globalen Navigationssatellitensystems, insbesondere gemäß GPS-Technologie, umfasst.

11. Roboter-Rasenmäher nach einem der vorhergehenden Ansprüche, wobei das wenigstens eine Positionssignal ein Funkfrequenz-Signal, insbesondere des Ultra-Breitband- oder des Bluetooth-Typs, umfasst.

12. Verfahren zum Schätzen der Unsicherheit in der Position eines Roboter-Rasenmähers, wobei der Roboter-Rasenmäher umfasst:
- einen Rahmen (3);
- Bewegungsmittel (4), welche durch den Rahmen (3) getragen sind und dazu eingerichtet sind, die Bewegung des Roboter-Rasenmähers zu bestimmen;
- Empfangsmittel (10), welche dazu eingerichtet sind, wenigstens ein Positionssignal zu empfangen;
wobei die Empfangsmittel (10) eine erste Antenne (11) und eine zweite Antenne (12) umfassen, wobei die erste Antenne (11) in Übereinstimmung mit einem ersten Bereich (3a) des Rahmens (3) angeordnet ist, wobei die zweite Antenne (12) in Übereinstimmung mit einem zweiten Bereich (3b) des Rahmens (3) angeordnet ist, wobei sich der erste Bereich (3a) des Rahmens (3) von dem zweiten Bereich (3b) des Rahmens (3) unterscheidet,
wobei das Verfahren die folgenden Schritte umfasst:
a) Empfangen eines ersten Positionssignals mittels der ersten Antenne (11), und
b) Empfangen eines zweiten Positionssignals mittels der zweiten Antenne (12), **dadurch gekennzeichnet, dass** die Unsicherheit in der Position des Roboter-Rasenmähers als eine Funktion des ersten Positionssignals und als eine Funktion des zweiten Positionssignals geschätzt wird, wobei das Verfahren ferner die folgenden Schritte umfasst:
c) Bestimmen eines gemessenen Wertes des Abstandes zwischen der ersten Antenne (11) und der zweiten Antenne (12) ausgehend von dem ersten Positionssignal und von dem zweiten Positionssignal, und
d) Vergleichen des gemessenen Wertes mit dem tatsächlichen Abstand zwischen der ersten Antenne (11) und der zweiten Antenne (12).

13. Verfahren nach Anspruch 12, wobei die geschätzte Unsicherheit in der Position des Roboter-Rasenmähers durch Vergleich mit einem Referenzsignal validiert wird, wobei das Referenzsignal mittels eines Hodometers erzeugt wird, welches dem Roboter-Rasenmäher zugeordnet ist, und/oder mittels eines Trägheitssensors, welcher dem Roboter-Rasenmäher zugeordnet ist, und/oder mittels eines Visionssystems, welches dem Roboter-Rasenmäher zugeordnet ist, und/oder mittels eines Empfängers wenigstens eines Signals, welcher dem Roboter-Rasenmäher zugeordnet ist.

14. Verfahren nach Anspruch 12 oder Anspruch 13, wobei das wenigstens eine Positionssignal ein Signal eines globalen Navigationssatellitensystems, insbesondere gemäß GPS-Technologie, umfasst.

15. Verfahren nach einem der Ansprüche 12 bis 14, wobei das wenigstens eine Positionssignal ein Funkfrequenz-Signal, insbesondere des Ultra-Breitband- oder des Bluetooth-Typs, umfasst.

## Revendications

1. Tondeuse robotisée comprenant :
- un châssis (3) ;
- un moyen de déplacement (4) supporté par ledit châssis (3) et conçu pour déterminer le mouvement de ladite tondeuse robotisée ;
- un moyen de réception (10) conçu pour recevoir au moins un signal de position, ledit moyen de réception (10) comprenant une première antenne (11) conçue pour recevoir un premier signal de position, ladite première antenne (11) étant disposée dans une première région (3a) dudit châssis (3) ;
une unité de commande (20) étant fonctionnellement reliée audit moyen de réception (10) afin de déterminer la position de ladite tondeuse robotisée en commençant à partir du signal de position reçu depuis ledit moyen de réception, ladite unité de commande étant en outre fonctionnellement reliée audit moyen de déplacement (4) afin d'entraîner ledit moyen de déplacement (4) en fonction de la position de ladite tondeuse robotisée ;
ledit moyen de réception (10) comprenant une seconde antenne (12) conçue pour recevoir un second signal de position, ladite seconde antenne (12) étant disposée dans une seconde région (3b) dudit châssis (3), ladite première région (3a) dudit châssis (3) étant distincte de ladite seconde région (3b) dudit châssis (3),
**caractérisée en ce que** ladite unité de commande (20) est conçue pour estimer l'incertitude de position de ladite tondeuse robotisée en fonction dudit premier signal de position et dudit second signal de position,
ladite unité de commande (20) étant conçue pour déterminer une valeur mesurée de la distance entre ladite première antenne (11) et ladite seconde antenne (12) en commençant à partir dudit premier signal de position et dudit second signal de position et
ladite unité de commande (20) étant conçue pour comparer ladite valeur mesurée à la distance réelle (d) entre ladite première antenne (11) et ladite seconde antenne (12).

2. Tondeuse robotisée selon la revendication 1, comprenant en outre un compteur kilométrique, fonctionnellement relié à ladite unité de commande (20) et conçu pour émettre un signal représentatif d'une progression de ladite tondeuse robotisée, ladite unité de commande (20) étant conçue pour obtenir une progression estimée de ladite tondeuse robotisée comme une fonction dudit premier signal de position et/ou comme une fonction dudit second signal de position et pour comparer ladite progression estimée de ladite tondeuse robotisée à la progression de ladite tondeuse robotisée obtenue à l'aide dudit compteur kilométrique, afin de valider l'incertitude estimée de la position de ladite tondeuse robotisée (2).

3. Tondeuse robotisée selon la revendication 1 ou selon la revendication 2, ladite unité de commande (20) étant conçue pour comparer l'incertitude estimée de la position de ladite tondeuse robotisée à au moins une valeur seuil, ladite valeur seuil étant en particulier représentative de l'incertitude maximale permise dans une portion prédéterminée d'une zone de travail (1) de ladite tondeuse robotisée.

4. Tondeuse robotisée selon l'une quelconque des revendications précédentes, ladite unité de commande (20) étant conçue pour estimer l'orientation (R) de ladite tondeuse robotisée en commençant à partir dudit premier signal de position et à partir dudit second signal de position,
ladite tondeuse robotisée comprenant en outre une boussole (13) fonctionnellement reliée à ladite unité de commande (20) et conçue pour émettre un signal représentatif d'une orientation (R) de ladite tondeuse robotisée, ladite unité de commande (20) étant conçue pour comparer l'orientation estimée de ladite tondeuse robotisée à l'orientation (R) de ladite tondeuse robotisée obtenue à l'aide de ladite boussole (13), afin de valider l'incertitude estimée de la position de ladite tondeuse robotisée.

5. Tondeuse robotisée selon la revendication 4, ladite unité de commande (20) étant en outre conçue pour générer un signal de commande en commençant à partir de l'orientation estimée (R) de ladite tondeuse robotisée et pour transmettre ledit signal de commande audit moyen de déplacement (4), en particulier pour provoquer une manoeuvre de ladite tondeuse robotisée en conjonction avec une phase de départ.

6. Tondeuse robotisée selon l'une quelconque des revendications précédentes, ledit moyen de réception (10) comprenant en outre un récepteur (21) dudit au moins un signal, ledit récepteur étant fonctionnellement interposé entre ladite première antenne (11) et ladite unité de commande (20).

7. Tondeuse robotisée selon la revendication 6, ledit récepteur (21) dudit au moins un signal étant fonctionnellement interposé entre ladite seconde antenne (12) et ladite unité de commande (20),
ledit récepteur (21) étant fonctionnellement relié à ladite première antenne (11) à l'aide d'une première entrée (22) et étant fonctionnellement relié à ladite seconde antenne (12) à l'aide d'une seconde entrée (23) ou
ledit moyen de réception (10) comprenant en outre un commutateur (25), en particulier un multiplexeur, fonctionnellement interposé entre lesdites première antenne (11) et seconde antenne (12) et ledit récepteur (21).

8. Tondeuse robotisée selon la revendication 6, ledit moyen de réception (10) comprenant en outre un récepteur additionnel (24) dudit au moins un signal, ledit récepteur additionnel (24) étant fonctionnellement interposé entre ladite seconde antenne (12) et ladite unité de commande (20).

9. Tondeuse robotisée selon l'une quelconque des revendications précédentes, comprenant en outre au moins un nœud de communication fonctionnellement relié à ladite unité de commande (20) et conçu pour permettre la transmission et/ou la réception de signaux sur un réseau de communication local ou distant.

10. Tondeuse robotisée selon l'une quelconque des revendications précédentes, ledit au moins un signal de position comprenant un signal de système global de navigation par satellite, en particulier selon la technologie GPS.

11. Tondeuse robotisée selon l'une quelconque des revendications précédentes, ledit au moins un signal de positionnement comprenant un signal de radiofréquence, en particulier du type ultra large bande ou Bluetooth.

12. Procédé d'estimation de l'incertitude de position d'une tondeuse robotisée, ladite tondeuse robotisée comprenant :
- un châssis (3) ;
- un moyen de déplacement (4) supporté par ledit châssis (3) et conçu pour déterminer le mouvement de ladite tondeuse robotisée ;
- un moyen de réception (10) conçu pour recevoir au moins un signal de position ;
ledit moyen de réception (10) comprenant une première antenne (11) et une seconde antenne (12), ladite première antenne (11) étant disposée en correspondance d'une première région (3a) dudit châssis (3), ladite seconde antenne (12) étant disposée en correspondance d'une seconde région (3b) dudit châssis (3), ladite première région (3a) dudit châssis (3) étant distincte de ladite seconde région (3b) dudit châssis (3),
ledit procédé comprenant les étapes de :
a) réception d'un premier signal de position à l'aide de ladite première antenne (11), et
b) réception d'un second signal de position à l'aide de ladite seconde antenne (12),
**caractérisé en ce que** l'incertitude de position de ladite tondeuse robotisée est estimée comme une fonction dudit premier signal de position et comme une fonction dudit second signal de position, le procédé comprenant en outre les étapes de :
c) détermination d'une valeur mesurée de la distance entre ladite première antenne (11) et ladite seconde antenne (12) en commençant à partir dudit premier signal de position et dudit second signal de position, et
d) comparaison de ladite valeur mesurée à la distance réelle entre ladite première antenne (11) et ladite seconde antenne (12).

13. Procédé selon la revendication 12, l'incertitude estimée de la position de ladite tondeuse robotisée étant validée par comparaison à un signal de référence, ledit signal de référence étant généré à l'aide d'un compteur kilométrique associé à ladite tondeuse robotisée et/ou à l'aide d'un capteur inertiel associé à ladite tondeuse robotisée et/ou à l'aide d'un système de vision associé à ladite tondeuse robotisée et/ou à l'aide d'un récepteur d'au moins un signal associé à ladite tondeuse robotisée.

14. Procédé selon la revendication 12 ou la revendication 13, ledit au moins un signal de position comprenant un système global de navigation par satellite, en particulier selon la technologie GPS.

15. Procédé selon l'une quelconque des revendications 12 à 14, ledit au moins un signal de position comprenant un signal de radiofréquence, en particulier du type ultra large bande ou Bluetooth.
